# EUROPEAN PATENT APPLICATION

(11) **EP 4 024 006 A1**
(43) Date of publication of application: **06.07.2022**
(21) Application number: 20868762.4
(22) Date of filing: 21.09.2020
(51) Int. Cl.: G01C 21/30

(54) **MAP LEVEL INDICATING METHOD, MAP LEVEL OBTAINING METHOD, AND RELATED PRODUCT**

(30) Priority: 25.09.2019 CN 201910915973
(71) Applicant: Huawei Technologies Co., Ltd., Longgang District Shenzhen, Guangdong 518129 (CN)
(72) Inventor: CHEN, Jun, Shenzhen, Guangdong 518129 (CN); WU, Yong, Shenzhen, Guangdong 518129 (CN); XIONG, Xin, Shenzhen, Guangdong 518129 (CN)
(74) Representative: Pfenning, Meinig & Partner mbB
(86) International application number: PCT/CN2020/116532
(87) International publication number: WO 2021/057662

(57) **Abstract**

A map level indication method, a map level obtaining method, and a related product are provided. The method includes: A server (20) determines, based on a control parameter corresponding to a target vehicle (100), a first map level corresponding to the target vehicle (100); and the server (20) sends a first message to a target in-vehicle system (10) of the target vehicle (100), where the first message indicates the first map level. This helps improve driving safety.

## Description

This application claims priority to Chinese Patent Application No. 201910915973.0, filed with the China National Intellectual Property Administration on September 25, 2019 and entitled "MAP LEVEL INDICATION METHOD, MAP LEVEL OBTAINING METHOD, AND RELATED PRODUCT", which is incorporated herein by reference in its entirety.

### TECHNICAL FIELD

The present invention relates to the field of intelligent vehicles, and specifically, to a map level indication method, a map level obtaining method, and a related product.

### BACKGROUND

During traveling of a vehicle, an in-vehicle system determines a corresponding map level based on a traveling status of the vehicle, and downloads corresponding map data based on the map level, to maintain safe driving. Therefore, when the traveling status of the vehicle changes definitely, for example, a geographical range changes definitely, a vehicle speed is too high, or a speed change is too fast, the map level needs to be changed in a timely manner. However, a data processing capability of the in-vehicle system is relatively low or slow, and the map level cannot be changed in a timely manner based on change information of the traveling status of the vehicle. Consequently, a map level that does not match a current traveling status may be used, thereby affecting traffic safety.

### SUMMARY

This application provides a map level indication method, a map level obtaining method, and a related product, to improve driving safety.

According to a first aspect, an embodiment of this application provides a map level indication method, including:
a server determines, based on a control parameter corresponding to a target vehicle, a first map level corresponding to the target vehicle; and
the server sends a first message to a target in-vehicle system of the target vehicle, where the first message indicates the first map level.

According to a second aspect, an embodiment of this application provides a map level obtaining method, including:
a target in-vehicle system receives a first message sent by a server, where the first message indicates a first map level, and the first map level is determined based on a control parameter corresponding to a target vehicle to which the target in-vehicle system belongs; and
the target in-vehicle system performs a control operation corresponding to the first map level.

In the solutions in this embodiment, the server determines, based on the control parameter corresponding to the target vehicle, the first map level corresponding to the target vehicle. Because a processing speed and a processing capability of the server on a traveling status are higher than those of the in-vehicle system, a matched map level can be quickly calculated for the in-vehicle system, to ensure that the in-vehicle system can use the matched map level in a timely manner. Because the in-vehicle system uses the matched first map level, and performs the control operation based on the first map level, so that driving safety is improved.

The method in this embodiment may be performed by the server, or may be performed by a chip in the server. In this embodiment, the server is used as an example for description. Further, the server in this embodiment may be a map server or a cloud server.

Optionally, before the server determines, based on the control parameter corresponding to the target vehicle, the first map level corresponding to the target vehicle, the method in this embodiment further includes:
the server receives a traveling status of the target vehicle that is uploaded by an RSU and/or a traveling status of the target vehicle that is uploaded by the target in-vehicle system; and
the server obtains, based on the traveling status of the target vehicle that is uploaded by the RSU and/or the traveling status of the target vehicle that is uploaded by the target in-vehicle system, the control parameter corresponding to the target vehicle.

In this embodiment, the server may receive the traveling status of the target vehicle that is uploaded by the RSU and/or the target in-vehicle system, so that a current traveling status of the target vehicle can be obtained comprehensively, to ensure that the obtained control parameter better conforms to the current traveling status of the target vehicle. In this way, the determined first map level better matches the current traveling status of the target vehicle. This ensures that the target in-vehicle system uses the matched first map level, so that driving safety is improved.

Further, the method in this embodiment further includes:
the server further receives a traveling status of another vehicle that is uploaded by at least one other in-vehicle system than the target in-vehicle system; and
the server obtains, based on the traveling status of the another vehicle, and the traveling status of the target vehicle that is uploaded by the RSU and/or the traveling status of the target vehicle that is uploaded by the target in-vehicle system, the control parameter corresponding to the target vehicle.

In the solutions in this embodiment, the server may receive the traveling status of the target vehicle that is uploaded by the RSU and/or the target in-vehicle system and the traveling status of the another vehicle that is uploaded by another in-vehicle system, and comprehensively determine the control parameter of the target vehicle based on traveling statuses of a plurality of vehicles, so that the control parameter includes global information of a road on which the target vehicle travels, and the determined first map level better matches a current traveling status of the target vehicle. This ensures that driving safety is improved when the target in-vehicle system controls traveling of the target vehicle by using the first map level.

In some possible implementations, that the server determines, based on the control parameter corresponding to the target vehicle, the first map level corresponding to the target vehicle includes:
the server determines, based on a preset mapping relationship and the control parameter corresponding to the target vehicle, the first map level corresponding to the target vehicle, where the preset mapping relationship includes a correspondence between the first map level and the control parameter.

In the solutions in this embodiment, the server can quickly determine the first map level by using the preset mapping relationship. This improves a response speed of the server for performing a map service function.

In some possible implementations, the control parameter includes one or more of a vehicle speed range, a vehicle acceleration range, a vehicle deceleration range, a vehicle autonomous driving level, and a category of a geographical environment in which the vehicle is located.

In the solutions in this embodiment, the control parameter includes rich information about the traveling status of the vehicle. The first map level determined by the server based on the control parameter better conforms to an actual traveling requirement of the target vehicle, so that driving safety is improved.

For example, the vehicle speed range in the control parameter includes vehicle speed information, and the category of the geographical environment in which the vehicle is located includes road condition information. In an actual case in which a vehicle speed is relatively low or a road is relatively crowded or congested, the server determines a higher map level, and indicates the in-vehicle system to use higher-precision map data corresponding to the map level, so as to avoid a short-distance traffic accident of the vehicle. For another example, the category of the geographical environment in which the vehicle is located includes a type of a current traveling road of the target vehicle. Because different types of roads can accommodate different traffic and have different road facilities, even if a traveling speed of the target vehicle is fixed, different map levels are required when the target vehicle travels on different types of roads. Therefore, in the solutions in this embodiment, the first map level determined by the server better conforms to an actual traveling requirement of the target vehicle.

In some possible implementations, before the server determines, based on the control parameter corresponding to the target vehicle, the first map level corresponding to the target vehicle, the method further includes:
the server obtains, based on a traveling status of the target vehicle, the control parameter corresponding to the target vehicle.

In some possible implementations, the first message is used to indicate the target in-vehicle system to perform the control operation corresponding to the first map level.

Correspondingly, that the target in-vehicle system performs the control operation corresponding to the first map level includes:
the target in-vehicle system uses map data at a map precision level corresponding to the first map level; and/or
the target in-vehicle system controls traveling of the target vehicle based on a mapping relationship between the first map level and a traveling parameter, where the traveling parameter includes one or more of the vehicle speed range, the vehicle acceleration range, the vehicle deceleration range, the vehicle autonomous driving level, and a vehicle hardware configuration level.

In the solutions in this embodiment, because the first map level determined by the server conforms to an actual traveling requirement of the target vehicle, the target in-vehicle system performs the corresponding control operation based on the first map level to control traveling of the target vehicle, so that safety during traveling of the target vehicle is improved, and then traffic safety is improved.

In some possible implementations, the map data is provided by the server for the target in-vehicle system.

Correspondingly, the map data is obtained by the target in-vehicle system from the server.

In some possible implementations, before the server determines, based on the control parameter corresponding to the target vehicle, the first map level corresponding to the target vehicle, the method further includes:
the server receives a request message sent by the target in-vehicle system, where the request message is used to request the server to indicate a map level.

Correspondingly, before the target in-vehicle system receives the first message sent by the server, the method further includes:
the target in-vehicle system sends the request message to the server, where the request message is used to request the server to indicate a map level.

In the solutions in this embodiment, the target in-vehicle system actively sends the request message to the server. After receiving the request message, the server responds to the request message in a timely manner, and delivers a matched map level to the target in-vehicle system, so that the target in-vehicle system can use a map level that matches a traveling status, and control traveling of the target vehicle. This improves driving safety.

In some possible implementations, before the server determines, based on the control parameter corresponding to the target vehicle, the first map level corresponding to the target vehicle, the method further includes:
the server receives a request message sent by the target in-vehicle system, where the request message includes indication information of the first map level.

The first message indicates the first map level by using acknowledgment information.

Correspondingly, before the target in-vehicle system receives the first message sent by the server, the method further includes:
the target in-vehicle system sends the request message to the server, where the request message includes the indication information of the first map level.

The first message indicates the first map level by using acknowledgment information.

In the solutions in this embodiment, the target in-vehicle system actively reports, to the server, a map level that the target in-vehicle system wants to use, to improve flexibility of using a map service function by the target in-vehicle system. In addition, the server determines, based on the control parameter of the target vehicle, a map level that can be actually used by the target in-vehicle system. After receiving the map level that can be actually used by the target in-vehicle system, the target in-vehicle system controls traveling of the target vehicle based on the map level, to ensure traveling safety of the target vehicle.

In some possible implementations, before the server determines, based on the control parameter corresponding to the target vehicle, the first map level corresponding to the target vehicle, the method further includes:
the server receives a request message sent by the target in-vehicle system, where the request message includes indication information of a second map level.

The first message is used to respond to the request message by using indication information of the first map level.

Correspondingly, before the target in-vehicle system receives the first message sent by the server, the method further includes:
the target in-vehicle system sends the request message to the server, where the request message includes the indication information of the second map level.

The first message is used to respond to the request message by using indication information of the first map level.

In the solutions in this embodiment, the target in-vehicle system may actively report, to the server, a map level that the target in-vehicle system wants to use, to improve flexibility of using a map service function by the target in-vehicle system. In addition, the server determines, based on the control parameter of the target vehicle, a map level that can be actually used by the target in-vehicle system, and determines, based on the map level, whether the target in-vehicle system can use the map level that the target in-vehicle system wants to use. After receiving the map level that can be actually used by the target in-vehicle system, the target in-vehicle system controls traveling of the target vehicle based on the map level, to ensure traveling safety of the target vehicle.

In some possible implementations, the method further includes:
the server sends a map stop indication to the target in-vehicle system, where the map stop indication is used to indicate the target in-vehicle system to stop using the first map level.

Correspondingly, in this implementation, the method further includes:
the target in-vehicle system receives the map stop indication sent by the server; and
the target in-vehicle system stops, according to the map stop indication, using the first map level.

In the solutions in this embodiment, the server actively indicates the target in-vehicle system to stop using the map level. To be specific, when the target in-vehicle system does not need a map service function, a map service for the target in-vehicle system is disabled in a timely manner. After receiving the map stop indication, the target in-vehicle system stops, in a timely manner, using the first map level, so that additional overheads are reduced (for example, costs during use of the map service function can be reduced).

In some possible implementations, before the server sends the map stop indication to the target in-vehicle system, the method further includes:
the server receives a map stop request message sent by the target in-vehicle system, where the map stop request message includes the indication information of the first map level.

Correspondingly, before the target in-vehicle system receives the map stop indication sent by the server, the method further includes:
the target in-vehicle system sends the map stop request message to the server, where the map stop request message includes the indication information of the first map level.

In the solutions in this embodiment, the target in-vehicle system may actively request the server for stop of using the map level, that is, request to disable a map service function for the target in-vehicle system. This improves flexibility in using the map service function. Then, the server receives a map stop request, and stops a map service for the target in-vehicle system when determining that the target in-vehicle system does not need to use the map service currently. After receiving the map stop indication, the target in-vehicle system stops, in a timely manner, using the first map level, so that additional overheads are reduced (for example, costs during use of the map service function can be reduced).

According to a third aspect, an embodiment of this application provides a server, including:
a processing module, configured to determine, based on a control parameter corresponding to a target vehicle, a first map level corresponding to the target vehicle; and
a transceiver module, configured to send a first message to a target in-vehicle system of the target vehicle, where the first message indicates the first map level.

In some possible implementations, when determining, based on the control parameter corresponding to the target vehicle, the first map level corresponding to the target vehicle, the processing module is specifically configured to:
determine, based on a preset mapping relationship and the control parameter corresponding to the target vehicle, the first map level corresponding to the target vehicle, where the preset mapping relationship includes a correspondence between the first map level and the control parameter.

In some possible implementations, the control parameter includes one or more of a vehicle speed range, a vehicle acceleration range, a vehicle deceleration range, a vehicle autonomous driving level, and a category of a geographical environment in which the vehicle is located.

In some possible implementations, before determining, based on the control parameter corresponding to the target vehicle, the first map level corresponding to the target vehicle, the processing module is further configured to obtain, based on a traveling status of the target vehicle, the control parameter corresponding to the target vehicle.

In some possible implementations, before the processing module determines, based on the control parameter corresponding to the target vehicle, the first map level corresponding to the target vehicle, the transceiver module is further configured to receive a traveling status of the target vehicle that is uploaded by a road side unit RSU and/or a traveling status of the target vehicle that is uploaded by the target in-vehicle system; and
the processing module is further configured to obtain the control parameter based on the traveling status of the target vehicle that is uploaded by the RSU and/or the traveling status of the target vehicle that is uploaded by the target in-vehicle system.

In some possible implementations, the transceiver module is further configured to receive a traveling status of another vehicle that is uploaded by at least one other in-vehicle system than the target in-vehicle system; and
when obtaining the control parameter based on the traveling status of the target vehicle that is uploaded by the RSU and/or the traveling status of the target vehicle that is uploaded by the target in-vehicle system, the processing module is specifically configured to:
obtain the control parameter based on the traveling status of the at least one other vehicle, and the traveling status of the target vehicle that is uploaded by the RSU and/or the traveling status of the target vehicle that is uploaded by the target in-vehicle system.

In some possible implementations, the first message is used to indicate the target in-vehicle system to perform a control operation corresponding to the first map level, where
the control operation includes that the target in-vehicle system uses map data at a map precision level corresponding to the first map level; and/or
the control operation includes that the target in-vehicle system controls traveling of the target vehicle based on a mapping relationship between the first map level and a traveling parameter, where the traveling parameter includes one or more of the vehicle speed range, the vehicle acceleration range, the vehicle deceleration range, the vehicle autonomous driving level, and a vehicle hardware configuration level.

In some possible implementations, the map data is provided by the server for the target in-vehicle system.

In some possible implementations, before determining, based on the control parameter corresponding to the target vehicle, the first map level corresponding to the target vehicle, the transceiver module is further configured to receive a request message sent by the target in-vehicle system, where the request message is used to request the server to indicate a map level.

In some possible implementations, before sending a map stop indication to the target in-vehicle system, the transceiver module is further configured to receive a map stop request message sent by the target in-vehicle system, where the map stop request message includes indication information of the first map level.

According to a fourth aspect, an embodiment of this application provides an in-vehicle system, including:
a transceiver module, configured to receive a first message sent by a server, where the first message indicates a first map level, and the first map level is determined based on a control parameter corresponding to a target vehicle to which the target in-vehicle system belongs; and
a processing module, configured to perform a control operation corresponding to the first map level.

In some possible implementations, the first map level is determined by the server based on a preset mapping relationship and the control parameter corresponding to the target vehicle, and the preset mapping relationship includes a correspondence between the first map level and the control parameter.

In some possible implementations, the control parameter includes one or more of a vehicle speed range, a vehicle acceleration range, a vehicle deceleration range, a vehicle autonomous control level, and a category of a geographical environment in which the vehicle is located.

In some possible implementations, the control parameter is obtained based on a traveling status of the target vehicle.

In some possible implementations, the control parameter is obtained by the server based on a traveling status of the target vehicle that is uploaded by a road side unit RSU and/or a traveling status of the target vehicle that is uploaded by the target in-vehicle system.

In some possible implementations, the control parameter is obtained by the server based on a traveling status of at least one other vehicle and the traveling status of the target vehicle that is uploaded by the RSU and/or the traveling status of the target vehicle that is uploaded by the target in-vehicle system, and the traveling status of the at least one other vehicle is uploaded by at least one other in-vehicle system than the target in-vehicle system to the server.

In some possible implementations, when performing the control operation corresponding to the first map level, the processing module is specifically configured to:
use map data at a map precision level corresponding to the first map level; and/or
control traveling of the target vehicle based on a mapping relationship between the first map level and a traveling parameter, where the traveling parameter includes one or more of the vehicle speed range, the vehicle acceleration range, the vehicle deceleration range, the vehicle autonomous driving level, and a vehicle hardware configuration level.

In some possible implementations, the map data is obtained by the target in-vehicle system from the server.

In some possible implementations, before receiving the first message sent by the server, the transceiver module is further configured to send a request message to the server, where the request message is used to request the server to indicate a map level.

In some possible implementations, the transceiver module is further configured to receive a map stop indication sent by the server; and
the processing module is further configured to stop, according to the map stop indication, using the first map level.

In some possible implementations, before receiving the map stop indication sent by the server, the transceiver module is further configured to send map stop request message to the server, where the map stop request message includes indication information of the first map level.

According to a fifth aspect, an embodiment of this application provides an apparatus, including: a memory, configured to store a program; and a processor, configured to execute the program stored in the memory. When the program stored in the memory is executed, the processor is configured to perform at least one method in the first aspect or the second aspect.

According to a sixth aspect, an embodiment of this application provides a computer-readable storage medium. The computer-readable storage medium stores program code that can be executed by a device, and when being executed by the device, the program code is used to implement at least one method in the first aspect or the second aspect.

According to a seventh aspect, an embodiment of this application provides a computer program product including instructions. When the computer program product runs on a computer, the computer is enabled to perform at least one method in the first aspect or the second aspect.

According to an eighth aspect, an embodiment of this application provides a chip. The chip includes a processor and a data interface. The processor reads, by using the data interface, instructions stored in a memory, to perform at least one method in the first aspect or the second aspect.

Optionally, in an implementation, the chip may further include a memory, the memory stores instructions, the processor is configured to execute the instructions stored in the memory, and when the instructions are executed, the processor is configured to perform at least one method in the first aspect or the second aspect.

According to a ninth aspect, an electronic device is provided. The electronic device includes the server in the third aspect or the in-vehicle system in the sixth aspect.

These aspects or other aspects of the present invention are clearer and more comprehensible in descriptions of the following embodiments.

### BRIEF DESCRIPTION OF DRAWINGS

FIG. 1A is a schematic diagram of a scenario of a map service according to an embodiment of this application;
FIG. 1B is a schematic diagram of a structure of a map service system according to an embodiment of this application;
FIG. 1C is a schematic diagram of a structure of a server according to an embodiment of this application;
FIG. 1D is a schematic diagram of a structure of another server according to an embodiment of this application;
FIG. 1E is a schematic diagram of a structure of another map service system according to an embodiment of this application;
FIG. 1F is a schematic diagram of a structure of an autonomous vehicle according to an embodiment of this application;
FIG. 2 is a schematic flowchart of a map level indication method according to an embodiment of this application;
FIG. 3 is a schematic flowchart of another map level indication method according to an embodiment of this application;
FIG. 4 is a schematic flowchart of still another map level indication method according to an embodiment of this application;
FIG. 5 is a schematic flowchart of still another map level indication method according to an embodiment of this application;
FIG. 6 is a schematic flowchart of still another map level indication method according to an embodiment of this application;
FIG. 7 is a schematic diagram of a structure of a server according to an embodiment of this application;
FIG. 8 is a schematic diagram of a structure of an in-vehicle system according to an embodiment of this application;
FIG. 9 is a schematic diagram of a structure of another server according to an embodiment of this application;
FIG. 10 is a schematic diagram of a structure of another in-vehicle system according to an embodiment of this application; and
FIG. 11 is a schematic diagram of a structure of a computer program product according to an embodiment of this application.

### DESCRIPTION OF EMBODIMENTS

The following describes the embodiments of this application with reference to accompanying drawings.

When an existing vehicle is traveling, an in-vehicle system collects traveling status information of the vehicle, determines a map level based on a traveling status of the vehicle, and then downloads/updates map data corresponding to the map level by using an electronic map corresponding to the map level, to implement safe driving. Therefore, when the traveling status of the vehicle changes definitely, the map level needs to be changed in a timely manner, and the map data needs to be downloaded/updated in a timely manner.

It should be noted that a data collection capability of the in-vehicle system is relatively localized and limited. Therefore, when the traveling status of the vehicle changes fast, for example, a geographical range changes definitely, a vehicle speed is too high, or a speed change is too fast, the in-vehicle system cannot collect the traveling status of the vehicle in a timely manner, and therefore cannot determine a map level corresponding to a current traveling status in a timely manner. In addition, because a data processing capability of the in-vehicle system is relatively low or slow, when the vehicle speed is too high and exceeds a speed range corresponding to a hardware or software capability of the in-vehicle system or the speed change is too fast and exceeds a speed change range corresponding to a hardware or software capability of the in-vehicle system, the change of the traveling status of the vehicle cannot be responded to in a timely manner.

Therefore, because the data collection capability and the processing capability of the in-vehicle system are limited, the in-vehicle system uses a map level that does not match the current traveling status. Consequently, accurate road condition information cannot be obtained, and then traffic safety is affected.

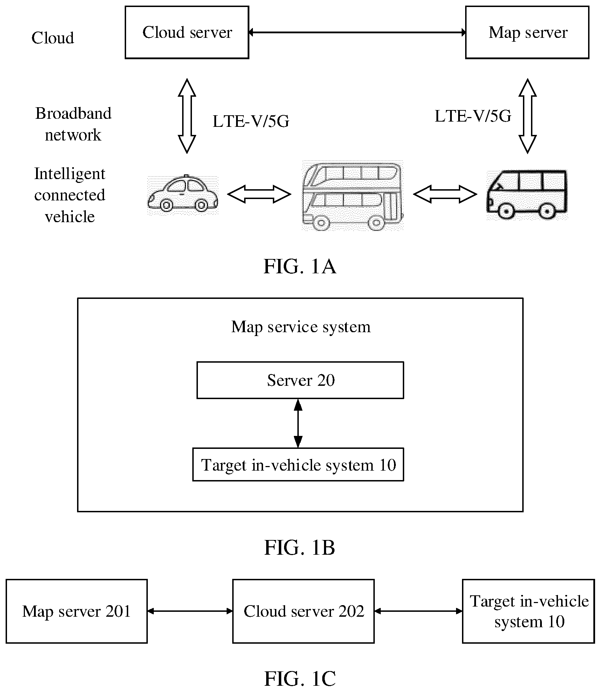

FIG. 1A is a schematic diagram of a scenario of a map service according to an embodiment of this application. The scenario includes a cloud, a broadband network (LTE/5G), and intelligent connected vehicles. The cloud includes a cloud server and a map server, and has a high-precision map service function. The intelligent connected vehicles include various types of vehicles (at various autonomous driving levels or autonomous driving classes) and in-vehicle software (computing platform) and hardware (camera, radar, chip, and terminal). The intelligent connected vehicle accesses the cloud through the broadband network, to obtain an accurate map level provided by the cloud server or the map server, and obtain high-precision map data provided by the cloud server or the map server, so as to implement safe driving. In addition, intelligent connected vehicles further obtain traveling status information from each other by using cameras, radars, and the broadband network, and provide the traveling status information for the cloud server or the map server, to obtain a map level and map data that are more timely and accurate.

FIG. 1B is a schematic diagram of an architecture of a map service system according to an embodiment of this application. The map service system includes a server 20 and a target in-vehicle system 10.

The server 20 includes a map server 201 and/or a cloud server 202, and the map server 201 and the cloud server 202 have a same service function or different service functions.

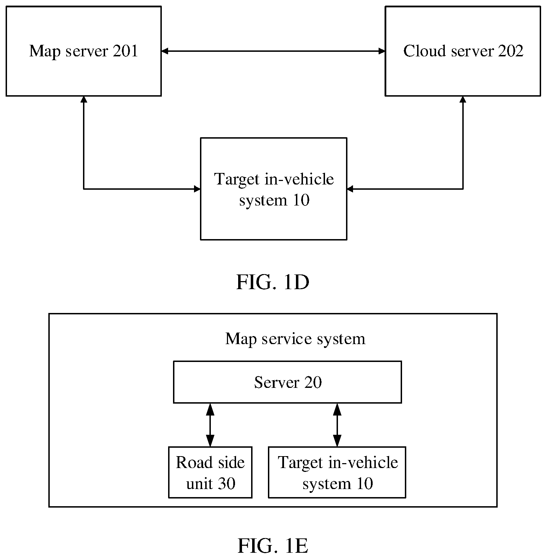

As shown in FIG. 1C, when the cloud server does not have a map service function, the cloud server 202 may serve as a carrier for information exchange, to implement information exchange between the target in-vehicle system 10 and the map server 201, so that map data is obtained from the map server 201. As shown in FIG. 1D, after the cloud server 202 has a map service function, the target in-vehicle system 10 may directly exchange information with the map server 201 and/or the cloud server 202, to obtain map data from the map server 201 or the cloud server 202.

The target in-vehicle system 10 includes a target vehicle 100.

For map level indication, the server 20 determines, based on a control parameter corresponding to the target vehicle 100, a first map level corresponding to the target vehicle 100, and sends a first message to the target in-vehicle system 10 through a broadband network, to indicate, by using the first message, that the target in-vehicle system 10 can use the first map level.

With reference to FIG. 1E, the map service system further includes a road side unit (Road Side Unit, RSU) 30. The road side unit 30 obtains a traveling status of the target vehicle 100, and sends the traveling status to the server 20 through the broadband network, so that the server 20 determines, based on the traveling status, the control parameter corresponding to the target vehicle 100.

In some possible implementations, the target in-vehicle system 10 configures the target vehicle 100 to a completely or partially autonomous driving mode. For example, the target vehicle 100 can control the target vehicle 100 in the autonomous driving mode, and may determine a current status of the vehicle and an ambient environment through a manual operation, determine a traveling status or possible behavior of at least one other vehicle in the ambient environment, determine a confidence level corresponding to a possibility that the at least one other vehicle performs the possible behavior, and control the target vehicle 100 based on the determined information.

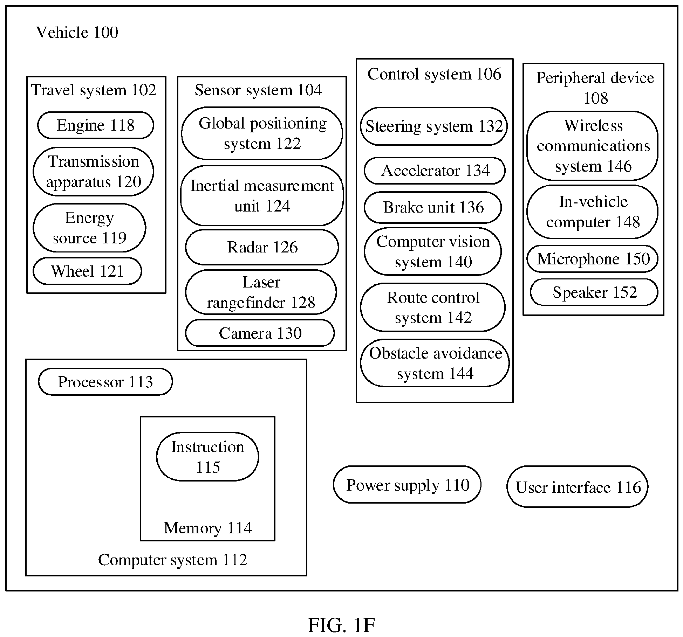

With reference to FIG. 1F, the vehicle 100 may include various systems, such as a travel system 1201, a sensor system 1202, a control system 1203, one or more peripheral devices 108, a power supply 110, a computer system 112, and a user interface 116. Optionally, the vehicle 100 may include more or fewer systems, and each system may include a plurality of elements. In addition, all the systems and elements of the vehicle 100 may be wiredly or wirelessly interconnected to each other.

The travel system 102 may include a component that provides power for the vehicle 100 to move. In an embodiment, the travel system 102 may include an engine 118, an energy source 119, a transmission apparatus 120, and a wheel/tire 121. The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 118 converts the energy source 119 into mechanical energy.

Examples of the energy source 119 include gasoline, diesel, other oil-based fuel, propane, other compressed gas-based fuel, ethanol, solar panels, batteries, and other power sources. The energy source 119 may also provide energy for another system of the vehicle 100.

The transmission apparatus 120 may transmit mechanical power from the engine 118 to the wheel 121. The transmission apparatus 120 may include a gearbox, a differential, and a drive shaft. In an embodiment, the transmission apparatus 120 may further include another component, for example, a clutch. The drive shaft may include one or more shafts that may be coupled to one or more wheels 121.

The sensor system 104 may include several sensors that sense information about an ambient environment of the vehicle 100. For example, the sensor system 104 may include a positioning system 122 (the positioning system may be a GPS, or may be a BeiDou system or another positioning system), an inertial measurement unit (inertial measurement unit, IMU) 124, a radar 126, a laser rangefinder 128, and a camera 130. The sensor system 104 may further include sensors (for example, an in-vehicle air quality monitor, a fuel gauge, and an oil temperature gauge) in an internal system of the monitored vehicle 100. Sensor data from one or more of these sensors can be used to detect an object and corresponding features (a location, a shape, a direction, a speed, and the like) of the object. Such detection and identification are key functions of a safety operation of the autonomous vehicle 100.

The positioning system 122 may be configured to estimate a geographical location of the vehicle 100. The IMU 124 is configured to sense location and orientation changes of the vehicle 100 based on inertial acceleration. In an embodiment, the IMU 124 may be a combination of an accelerometer and a gyroscope.

The radar 126 may sense an object in the ambient environment of the vehicle 100 by using a radio signal. In some embodiments, in addition to sensing the object, the radar 126 may be further configured to sense a speed and/or a moving direction of the object.

The laser rangefinder 128 may sense, by using a laser, an object in an environment in which the vehicle 100 is located. In some embodiments, the laser rangefinder 128 may include one or more laser sources, a laser scanner, one or more detectors, and another system component.

The camera 130 may be configured to capture a plurality of images of the ambient environment of the vehicle 100. The camera 130 may be a static camera or a video camera.

The control system 106 controls operations of the vehicle 100 and the components of the vehicle 100. The control system 106 may include various elements, including a steering system 132, an accelerator 134, a brake unit 136, a sensor fusion algorithm 138, a computer vision system 140, a route control system 142, and an obstacle avoidance system 144.

The steering system 132 may operate to adjust a moving direction of the vehicle 100, for example, may be a steering wheel system.

The accelerator 134 is configured to control an operating speed of the engine 118 and further control a speed of the vehicle 100.

The brake unit 136 is configured to control the vehicle 100 to decelerate. The brake unit 136 may use friction to slow down the wheel 121. In another embodiment, the brake unit 136 may convert kinetic energy of the wheel 121 into a current. The brake unit 136 may alternatively reduce a rotation speed of the wheel 121 by using another method, to control the speed of the vehicle 100.

The computer vision system 140 may operate to process and analyze images captured by the camera 130, to identify objects and/or features in the ambient environment of the vehicle 100. The objects and/or features may include traffic signals, road boundaries, and obstacles. The computer vision system 140 may use an object recognition algorithm, a structure from motion (Structure from Motion, SFM) algorithm, video tracking, and other computer vision technologies. In some embodiments, the computer vision system 140 may be configured to: draw a map for an environment, track an object, estimate a speed of the object, and the like.

The route control system 142 is configured to determine a travel route of the vehicle 100. In some embodiments, the route control system 142 may determine the travel route for the vehicle 100 based on data from the sensor 138, the GPS 122, and one or more predetermined maps.

The obstacle avoidance system 144 is configured to: identify, evaluate, and avoid or bypass a potential obstacle in the environment of the vehicle 100 in another manner.

Certainly, for example, the control system 106 may add or alternatively include components other than those shown and described, or may delete some of the components shown above.

The vehicle 100 interacts with an external sensor, another vehicle, another computer system, or a user by using the peripheral device 108. The peripheral device 108 may include a wireless communications system 146, an in-vehicle computer (or display) 148, a microphone 150, and/or a speaker 152.

In some embodiments, the peripheral device 108 provides a means for a user of the vehicle 100 to interact with the user interface 116. For example, the in-vehicle computer (or display) 148 may provide information for the user of the vehicle 100. The user interface 116 may further operate the in-vehicle computer (or display) 148 to receive an input from the user. The in-vehicle computer (or display) 148 may be operated by using a touchscreen. In another case, the peripheral device 108 may provide a means for the vehicle 100 to communicate with another device located in the vehicle. For example, the microphone 150 may receive audio (for example, a voice command or other audio input) from the user of the vehicle 100. Similarly, the speaker 152 may output audio to the user of the vehicle 100.

The wireless communications system 146 may wirelessly communicate with one or more devices directly or through a communications network. For example, the wireless communications system 146 may use 3G cellular communication such as CDMA, EVD0, or GSM/GPRS, 4G cellular communication such as LTE, or 5G cellular communication. The wireless communications system 146 may communicate with a wireless local area network (wireless local area network, WLAN) through Wi-Fi. In some embodiments, the wireless communications system 146 may directly communicate with a device through an infrared link, Bluetooth, or ZigBee. For example, there are various vehicle communications systems in another wireless protocol. For example, the wireless communications system 146 may include one or more dedicated short range communications (dedicated short range communications, DSRC) devices, and these devices may include public and/or private data communication between vehicles and/or roadside stations.

The power supply 110 may supply power to various components of the vehicle 100. In an embodiment, the power supply 110 may be a rechargeable lithium-ion or lead-acid battery. One or more battery packs of such batteries may be configured as the power supply to supply power to the components of the vehicle 100. In some embodiments, the power supply 110 and the energy source 119 may be implemented together, for example, in some pure electric vehicles.

Some or all functions of the vehicle 100 are controlled by the computer system 112. The computer system 112 may include at least one processor 113. The processor 113 executes an instruction 115 stored in a non-transient computer-readable medium such as a data storage apparatus 114. The computer system 112 may alternatively be a plurality of computing devices that control an individual component or a system of the vehicle 100 in a distributed manner.

The processor 113 may be any conventional processor, such as a commercially available CPU. Alternatively, the processor may be a dedicated device such as an ASIC or another hardware-based processor. Although FIG. 1F functionally illustrates the processor, the memory, and other elements of the computer 110 in a same block, a person of ordinary skill in the art should understand that the processor, the computer, or the memory may actually include a plurality of processors, computers, or memories that may or may not be stored in a same physical housing. For example, the memory may be a hard disk drive, or another storage medium located in a housing different from that of the computer 110. Therefore, it is understood that a reference to the processor or the computer includes a reference to a set of processors or computers or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the vehicle and wirelessly communicate with the vehicle. In other aspects, some of the processes described herein are performed on the processor disposed inside the vehicle, while others are performed by a remote processor. The processes include necessary steps for performing a single operation.

In some embodiments, the data storage apparatus 114 may include the instruction 115 (for example, program logic), and the instruction 115 may be executed by the processor 113 to perform various functions of the vehicle 100, including the functions described above. The data storage apparatus 114 may further include additional instructions, including instructions for sending data to, receiving data from, interacting with, and/or controlling one or more of the travel system 102, the sensor system 104, the control system 106, and the peripheral device 108.

In addition to the instruction 115, the data storage apparatus 114 may further store data, such as a road map, route information, a location, a direction, a speed, and other vehicle data of the vehicle, and other information. Such information may be used by the vehicle 100 and the computer system 112 when the vehicle 100 operates in an autonomous mode, a semi-autonomous mode, and/or a manual mode.

The camera 130 may include a driver monitoring system (driver monitoring system, DMS) camera, a cockpit monitoring system (cockpit monitoring system, CMS) camera, and a rearview camera used to obtain a nextvehicle image. The DMS camera is configured to obtain an image of a head of a driver. The CMS camera is configured to obtain an image of an interior of the vehicle driven by the driver, where the image displays the head of the driver. The processor 113 obtains a spatial location of a human eye of the driver based on the image obtained by the DMS camera and the image obtained by the CMS camera.

The user interface 116 is configured to provide information for or receive information from the user of the vehicle 100. Optionally, the user interface 116 may include one or more input/output devices, such as the wireless communications system 146, the in-vehicle computer (or display) 148, the microphone 150, and the speaker 152, in a set of peripheral devices 108.

The computer system 112 may control functions of the vehicle 100 based on input signals received from various systems (for example, the travel system 102, the sensor system 104, and the control system 106) and the user interface 116. For example, the computer system 112 may control the steering unit 132 by using a signal from the control system 106, to avoid obstacles detected by the sensor system 104 and the obstacle avoidance system 144. In some embodiments, the computer system 112 provides control over many aspects of the vehicle 100 and various systems thereof.

Optionally, one or more of the foregoing components may be installed separately from or associated with the vehicle 100. For example, the data storage apparatus 114 may be partially or completely separated from the vehicle 1100. The foregoing components may be communicatively coupled together in a wired and/or wireless manner.

Optionally, the components are merely examples. In actual application, components in the foregoing modules may be added or deleted based on an actual requirement. FIG. 1F should not be construed as a limitation on the embodiments of the present invention.

An autonomous vehicle traveling on a road, such as the vehicle 100, may identify objects in the ambient environment of the vehicle 100 to determine to adjust a current speed. The objects may be the other vehicles, traffic control devices, or objects of other types. In some examples, the autonomous vehicle may independently consider each identified object, and may determine a to-be-adjusted speed of the autonomous vehicle based on characteristics of each object, such as a current speed of the object, acceleration of the object, and a distance between the object and the vehicle.

Optionally, the autonomous vehicle 100 or a computing device (such as the computer system 112, the computer vision system 140, and the data storage apparatus 114 in FIG. 1F) associated with the autonomous vehicle 100 may predict behavior of the identified object based on the characteristics of the identified object and a status (for example, traffic, rain, or ice on a road) of the ambient environment. Optionally, all the identified objects depend on behavior of each other, and therefore all the identified objects may be considered together to predict behavior of a single identified object. The vehicle 100 can adjust the speed of the vehicle 100 based on the predicted behavior of the identified object. In other words, the autonomous vehicle can determine, based on the predicted behavior of the object, a specific stable state (for example, acceleration, deceleration, or stop) to which the vehicle needs to be adjusted. In this process, another factor may also be considered to determine the speed of the vehicle 100, for example, a horizontal location of the vehicle 100 on a road on which the vehicle 100 travels, a curvature of the road, and proximity between a static object and a dynamic object.

In addition to providing an instruction for adjusting the speed of the autonomous vehicle, the computing device may further provide an instruction for modifying a steering angle of the vehicle 100, so that the autonomous vehicle follows a given trajectory and/or maintains safe lateral and longitudinal distances between the autonomous vehicle and an object (for example, a car in an adjacent lane on the road) near the autonomous vehicle.

The vehicle 100 may be a vehicle that supports autonomous driving, for example, a car, a truck, a motorcycle, a bus, a ship, an airplane, a helicopter, a lawn mower, an entertainment car, a playground vehicle, a construction device, a tram, a golf cart, a train, and a handcart. This is not specially limited in the embodiments of the present invention.

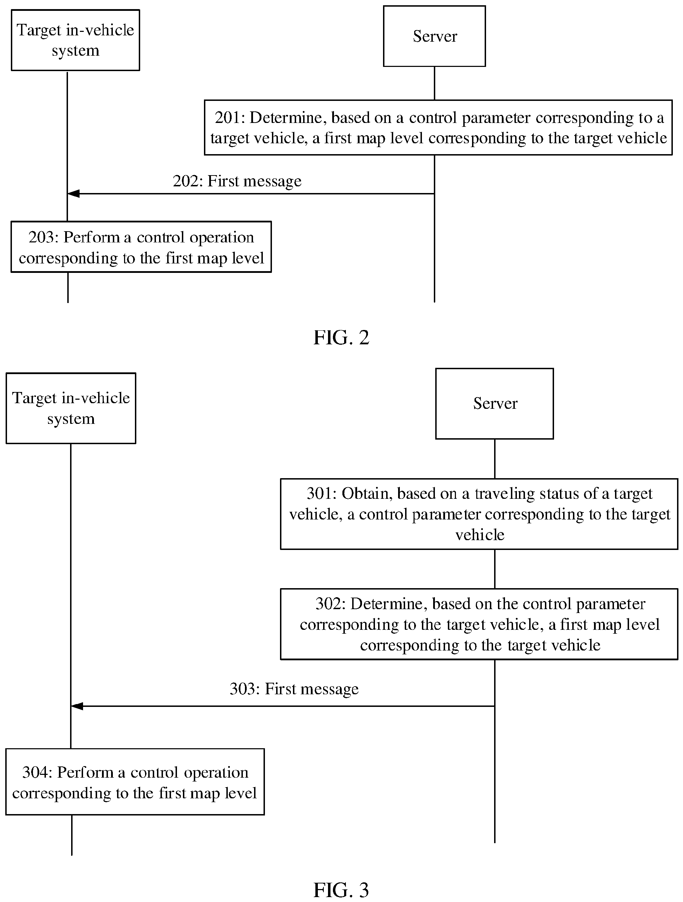

FIG. 2 is a schematic flowchart of a map level indication method according to an embodiment of this application. The method includes but is not limited to the following steps.

201: A server determines, based on a control parameter corresponding to a target vehicle, a first map level corresponding to the target vehicle.

Further, the server may determine, based on a preset mapping relationship and the control parameter, the first map level corresponding to the target vehicle. The control parameter includes one or more of a vehicle speed range, a vehicle acceleration range, a vehicle deceleration range, a vehicle autonomous driving level, and a category of a geographical environment in which the vehicle is located.

The category of the geographical environment may include one or more of an urban road type, a highway type, a landscape type, and a geographical terrain type.

The urban road type may include one or more of an express road, an arterial road, and a branch.

The highway type may include one or more of a freeway, a first class highway, a second class highway, and a third class highway. The first class highway may be a highway that can be used for traveling of vehicles in separate directions and divided lanes and in which entrance and exit are partially controlled and/or there are some interchanges. The first class highway is mainly connected to an important political and economic center, leads to a key industrial and mining area, and is a national arterial highway. A four-lane first class highway is usually adaptable to annual average day and night traffic of 15000 to 30000 passenger cars converted from various vehicles in a prospective design lifespan. A six-lane first class highway is usually adaptable to annual average day and night traffic of 25000 to 55000 passenger cars converted from various vehicles in a prospective design lifespan. The second class highway may be an arterial highway connected to a place such as a political and economic center or a large industrial and mining area, or a suburban highway with heavy traffic. The second class highway is usually adaptable to annual average day and night traffic of 3000 to 7500 medium-duty trucks converted from various vehicles in a prospective design lifespan. The third class highway is a common arterial highway connects counties and towns above the county level. Usually, the third class highway is adaptable to traveling of various vehicles. The third class highway is usually adaptable to annual average day and night traffic of 1000 to 4000 medium-duty trucks converted from various vehicles in a prospective design lifespan.

The landscape type may include one or more of a rural road, a suburban road, an urban road, and a city road.

The geographical terrain type may include one or more of a highland, a mountain land, a plain, a basin, and a hilly land.

Table 1 shows the foregoing preset mapping relationship by using an example in which the category of the geographical environment is the highway type.

**Table 1**

| Map level | Control parameter | | | | |
|---|---|---|---|---|---|
| | Vehicle speed range (km/h) | Vehicle acceleration range (m/s²) | Vehicle deceleration range (m/s²) | Vehicle autonomous driving level | Category of a geographical environment in which a vehicle is located |
| Level 1 | 80 to 100 | 1.0 to 3.0 | 1.0 to 3.0 | L1 | High-speed highway |
| Level 2 | 30 to 80 | 0.5 to 1.0 | 0.5 to 1.0 | L1 or L2 | First class highway or second class highway |
| Level 3 | 0 to 30 | 0.1 to 0.5 | 0.1 to 0.5 | L3 to L5 | Third class highway |

For example, when a vehicle speed range corresponding to the target vehicle is 30 to 80 km/h, and a vehicle acceleration is 0.5 to 1.0 m/s², the server may determine that the first map level of the target vehicle is level 2. For another example, when a vehicle speed range corresponding to the target vehicle is 30 to 80 km/h, a vehicle acceleration is 0.5 to 1.0 m/s², and a vehicle autonomous driving level is L1 or L2, the server may also determine that the first map level corresponding to the target vehicle is level 2.

In some possible implementations, the control parameter may further include a map element type and a hardware configuration level.

The map element type may include one or more of a lane line, a lane slope, a lane curvature, a lane guide, a road boundary, a road light, a traffic light, and a traffic sign/bulletin board. The traffic sign/bulletin board may be, for example, one or more of open, closed, bi-directional, unidirectional, speed restriction, traffic control, license plate restriction, and the like. Each map level corresponds to some or all of the foregoing map element types, and different map levels may correspond to different map element types.

The hardware configuration level may include some or all of level 1, level 2, and level 3. Each map level corresponds to some or all of the foregoing hardware configuration levels, and different map levels may correspond to different hardware configuration levels.

For example, when the hardware configuration level is level 1, a hardware configuration corresponding to the target vehicle may be a monocular camera, a binocular camera, or a trinocular camera. When the hardware configuration level is level 2, a hardware configuration corresponding to the target vehicle may be a millimeter-wave radar or an ultrasonic radar. When the hardware configuration level is level 3, a hardware configuration level of the target vehicle may be a 16-channel lidar, a 32-channel lidar, or a 64-channel lidar.

It should be noted that a specific form of the foregoing control parameter is merely an example. This embodiment of the present invention is not limited thereto, and another type of control parameter may alternatively be used in actual application. For example, the landscape type may further include another landscape road. The geographical terrain type may also include another type.

202: The server sends a first message to a target in-vehicle system of the target vehicle.

The first message includes indication information of the first map level, and indicates the first map level by using the indication information.

Further, after receiving the first message, the target in-vehicle system parses the first message, and determines, by using the indication information in the first message, that the first map level can be used.

203: The target in-vehicle system performs a control operation corresponding to the first map level.

Optionally, the control operation includes: The target in-vehicle system uses map data at a map precision level corresponding to the first map level; and/or controls traveling of the target vehicle based on a mapping relationship between the first map level and a traveling parameter, where the traveling parameter includes one or more of the vehicle speed range, the vehicle acceleration range, the vehicle deceleration range, the vehicle autonomous driving level, and a vehicle hardware configuration level.

Specifically, the target in-vehicle system determines, based on a mapping relationship between a map level and a map precision level, the map precision level corresponding to the first map level (for example, when a map level is level 1, a corresponding map precision level is also level 1), obtains a map element corresponding to the first map level (or the map precision level), then obtains, from the server, map data corresponding to the map element (or the map precision level), and uses the map data.

For example, when the map element corresponding to the first map level includes a traffic light, the target in-vehicle system downloads layout information of traffic lights on a current traveling road from the server, and then displays, based on the layout information, the traffic lights on the road on an electronic map displayed in a display interface managed by the target in-vehicle system.

Further, the target in-vehicle system may control traveling of the target vehicle based on a mapping relationship between a map level and a traveling parameter and the first map level. Specifically, after a value range of the traveling parameter corresponding to the first map level is obtained, the traveling parameter of the target vehicle is controlled to be in the value range, to implement safe driving.

Table 2 shows the mapping relationship between a map level and a traveling parameter.

**Table 2**

| Map level | Traveling parameter | | | | |
|---|---|---|---|---|---|
| | Speed range (km/h) | Acceleration range (m/s²) | Deceleration range (m/s²) | Autonomous driving level | Hardware configuration level |
| Level 1 | 80 to 100 | 1.0 to 3.0 | 1.0 to 3.0 | L1 | Level 1 |
| Level 2 | 30 to 80 | 0.5 to 1.0 | 0.5 to 1.0 | L1 or L2 | Level 2 |
| Level 3 | 0 to 30 | 0.1 to 0.5 | 0.1 to 0.5 | L3 to L5 | Level 3 |

For example, if the first map level is level 1, the target in-vehicle system may control a traveling speed of the target vehicle to be in a range of 80 to 100 km/h, control an acceleration to be in a range of 1.0 to 3.0 m/s², control a deceleration to be in a range of 1.0 to 3.0 m/s², set an autonomous driving level of the target vehicle to L1, and set a hardware configuration level to level 1.

It can be learned that, in the solutions in this embodiment, the server determines the map level of the target vehicle based on the control parameter corresponding to the target vehicle. Because the control parameter includes rich information related to a current traveling status of the target vehicle, the obtained map level is more accurate. In addition, because the server has a relatively high computing capability, a map level that matches the current traveling status can be quickly calculated for the target in-vehicle system, so that the in-vehicle system can use the matched map level in a timely manner. Then, the target in-vehicle system uses map data corresponding to the map level and/or controls traveling of the target vehicle based on the map level. This improves driving safety.

FIG. 3 is a schematic flowchart of another map level indication method according to an embodiment of this application. Content in this embodiment that is the same as that in the embodiment shown in FIG. 2 is not repeatedly described herein. The method in this embodiment includes the following steps.

301: A server obtains, based on a traveling status of a target vehicle, a control parameter corresponding to the target vehicle.

The traveling status may include current traveling status information and/or current traveling status change information of the target vehicle. The current traveling status information is a traveling status at a current moment or an average value of traveling statuses within a latest time period (for example, 1 second or 1 minute) before the current moment. The current traveling status change information is a change amount between the current traveling status information and traveling status information at a corresponding moment in a time period (for example, 1 second or 1 minute) before the current moment.

In some possible implementations, the traveling status of the target vehicle is sent by a target in-vehicle system to the server, and/or sent by an RSU to the server. In other words, the traveling status of the target vehicle may be sent by the target in-vehicle system to the server, or the traveling status of the target vehicle may be sent by the RSU to the server, or the traveling status of the target vehicle may be sent by the target in-vehicle system and the RSU to the server. Traveling statuses of the target vehicle that are provided by the target in-vehicle system and the RSU for the server may be parameters of a same type or may be parameters of different types.

In some possible implementations, in addition to receiving the traveling status of the target vehicle, the server may further receive a traveling status of another vehicle that is uploaded by at least one other in-vehicle system in a range managed by the server and/or receive a traveling status of at least one other vehicle that is uploaded by the RSU. The server obtains the control parameter of the target vehicle based on a combination of the traveling status of the target vehicle and the traveling status of the at least one other vehicle. To be specific, global information of a road on which the target vehicle travels is determined based on a combination of the traveling status of the target vehicle and traveling statuses of a plurality of vehicles, and the control parameter of the target vehicle is determined based on the global information. The plurality of vehicles are vehicles in the at least one other vehicle that affect traveling of the target vehicle.

The traveling status includes one or more of a vehicle speed, an acceleration, a deceleration, an autonomous driving level, a hardware configuration level, and a category of a geographical environment in which the vehicle is located.

Further, the server determines, based on the traveling status of the target vehicle, the control parameter corresponding to the target vehicle. Specifically, the server may determine the control parameter of the target vehicle based on a value range corresponding to each parameter included in the traveling status of the target vehicle. A process of obtaining the control parameter corresponding to the target vehicle is described by using an example in which a vehicle speed range is obtained. As shown in Table 1, the vehicle speed range in the control parameter corresponding to the target vehicle is obtained based on a vehicle speed range within which a speed of the target vehicle falls.

302: The server determines, based on the control parameter corresponding to the target vehicle, a first map level corresponding to the target vehicle.

For an implementation process of 302, refer to the content in 201. Details are not described herein.

303: The server sends a first message to the target in-vehicle system of the target vehicle.

304: The target in-vehicle system performs a control operation corresponding to the first map level.

For an implementation process of 304, refer to the content in 203. Details are not described herein.

It can be learned that, in the solutions in this embodiment, the server obtains, through combination based on the received traveling status of the at least one other vehicle, the global information of the road on which the target vehicle travels, and determines the control parameter of the target vehicle based on the global information, so that a problem that a data collection capability of the in-vehicle system is limited is resolved. Because the control parameter includes rich information related to a current traveling status of the target vehicle, the obtained map level is more accurate. In addition, because the server has a relatively high computing capability, a map level that matches the current traveling status can be quickly calculated for the target in-vehicle system, so that the target in-vehicle system can use the matched map level in a timely manner. In addition, the target in-vehicle system uses map data corresponding to the map level and/or controls traveling of the target vehicle. This improves driving safety.

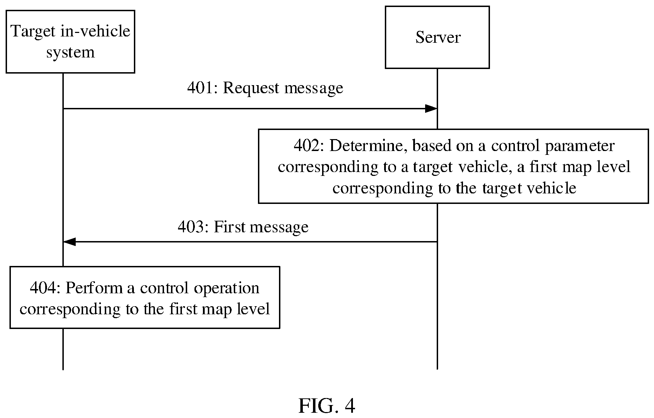

FIG. 4 is a schematic flowchart of another map level indication method according to an embodiment of this application. Content in this embodiment that is the same as that in the embodiments shown in FIG. 2 and FIG. 3 is not repeatedly described herein. The method includes the following steps.

401: A target in-vehicle system sends a request message to a server.

It may be understood that a request function of the request message varies with a request purpose of the target in-vehicle system.

Optionally, when the request message is used to request the server to indicate a map level, that is, the request message does not carry indication information of any map level, the request message is used to request the server to send the map level to the target in-vehicle system.

Optionally, when the request message includes indication information of a first map level, that is, the target in-vehicle system reports, to the server by using the request message, that the target in-vehicle system wants to use the first map level, the request message is used to request the server to determine whether the target in-vehicle system can use the first map level.

Optionally, when the request message includes indication information of a second map level, that is, the target in-vehicle system reports, to the server by using the request message, that the target in-vehicle system wants to use the second map level, the request message is used to request the server to determine whether the target in-vehicle system can use the second map level.

402: The server determines, based on a control parameter corresponding to a target vehicle, a first map level corresponding to the target vehicle.

Optionally, before determining the first map level, the server first obtains, based on a traveling status of the target vehicle, the control parameter corresponding to the target vehicle. For an implementation process, refer to the descriptions in 301. Details are not described again.

403: The server sends a first message to the target in-vehicle system of the target vehicle.

When the request message does not carry indication information of a map level, the first message is used to indicate the first map level. After receiving the first message, the target in-vehicle system parses the first message, and determines, by using indication information in the first message, that the first map level can be used.

When the request message includes indication information of the first map level, because the server determines that a map level that can be used by the target in-vehicle system is also the first map level, which is consistent with a map level that the target in-vehicle system wants to use, the first message may indicate the first map level by using acknowledgment information. To be specific, the first message includes the acknowledgment information of the first map level, and the server indicates, by using the acknowledgment information, that the target in-vehicle system can use the first map level.

When the request message includes indication information of the second map level, because the server determines that an in-vehicle system that can be used by the target in-vehicle system is the first map level, which is inconsistent with a map level that the target in-vehicle system wants to use, the first message is used to respond to the request message by using indication information of the first map level. To be specific, the server indicates, by using the indication information of the first map level, that the target in-vehicle system cannot use the second map level, and the map level that can be used by the target in-vehicle system is the first map level.

404: The target in-vehicle system performs a control operation corresponding to the first map level.

For an implementation process of 404, refer to the content in 203. Details are not described herein.

It can be learned that, in the solutions in this embodiment, the target in-vehicle system may actively send a map request to the server. This improves flexibility of a map service function. Because the server has a relatively high computing capability, the request message can be responded to in a timely manner. In addition, the server determines the map level of the target vehicle based on the control parameter corresponding to the target vehicle. Because the control parameter includes rich information related to a current traveling status of the target vehicle, the obtained map level better conforms to an actual traveling requirement of the target vehicle. In addition, the target in-vehicle system uses map data corresponding to the map level and/or controls traveling of the target vehicle. This improves driving safety.

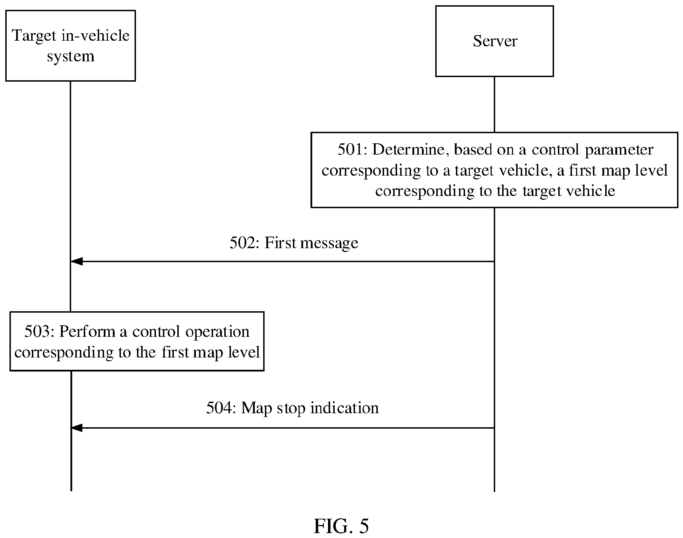

FIG. 5 is a schematic flowchart of another map level indication method according to an embodiment of this application. Content in this embodiment that is the same as that in the embodiments shown in FIG. 2, FIG. 3, and

FIG. 4 is not repeatedly described herein. The method in this embodiment includes the following steps.

501: A server determines, based on a control parameter corresponding to a target vehicle, a first map level corresponding to the target vehicle.

It should be noted that before the server determines, based on the control parameter corresponding to the target vehicle, the first map level corresponding to the target vehicle, the server first obtains, based on a traveling status of the target vehicle, the control parameter corresponding to the target vehicle. For a detailed process of obtaining the control parameter, refer to the content in 301. Details are not described again.

In addition, before the server obtains, based on the traveling status of the target vehicle, the control parameter corresponding to the target vehicle, a target in-vehicle system may first send a request message to the server. For details, refer to the content in 401.

502: The server sends a first message to the target in-vehicle system of the target vehicle.

For a specific implementation process in 503, refer to the content in 403. Details are not described again.

503: The target in-vehicle system performs a control operation corresponding to the first map level.

For an implementation process of 304, refer to the content in 203. Details are not described herein.

504: The server sends a map stop indication to the target in-vehicle system.

The map stop indication is used to indicate the target in-vehicle system to stop using the first map level.

It can be learned that, in the solutions in this embodiment, the server determines the map level of the target vehicle based on the control parameter corresponding to the target vehicle. Because the control parameter includes rich information related to a current traveling status of the target vehicle, the obtained map level better conforms to an actual traveling requirement of the target vehicle. In addition, because the server has a relatively high computing capability, a map level that matches the current traveling status can be quickly calculated for the target in-vehicle system. This improves a response speed of a map service function. In addition, the server actively disables a map service for the target in-vehicle system, so that additional overheads of the target in-vehicle system can be reduced.

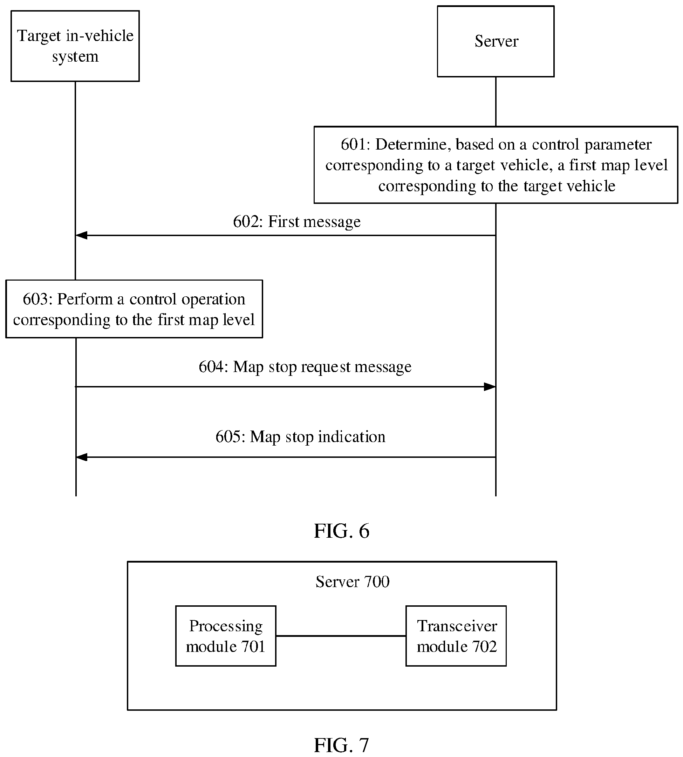

FIG. 6 is a schematic flowchart of another map level indication method according to an embodiment of this application. Content in this embodiment that is the same as that in the embodiments shown in FIG. 2, FIG. 3, FIG. 4, and FIG. 5 is not repeatedly described herein. The method in this embodiment includes the following steps.

601: A server determines, based on a control parameter corresponding to a target vehicle, a first map level corresponding to the target vehicle.

It should be noted that before the server determines, based on the control parameter corresponding to the target vehicle, the first map level corresponding to the target vehicle, the server first obtains, based on a traveling status of the target vehicle, the control parameter corresponding to the target vehicle. For a detailed process of obtaining the control parameter, refer to the content in 301. Details are not described again.

In addition, before the server obtains, based on the traveling status of the target vehicle, the control parameter corresponding to the target vehicle, a target in-vehicle system may first send a request message to the server. For details, refer to the content in 401. Details are not described again.

602: The server sends a first message to the target in-vehicle system of the target vehicle.

603: The target in-vehicle system performs a control operation corresponding to the first map level.

For an implementation process of 304, refer to the content in 203. Details are not described herein.

604: The target in-vehicle system sends a map stop request message to the target in-vehicle system.

The map stop request message includes indication information of the first map level, and the map stop request message is used to request the server to confirm that the target in-vehicle system can stop using the first map level.

605: The server sends a map stop indication to the target in-vehicle system.

The map stop indication is used to indicate that the target in-vehicle system is allowed to stop using the first map level.

It can be learned that, in the solutions in this embodiment, the server determines the map level of the target vehicle based on the control parameter corresponding to the target vehicle. Because the control parameter includes rich information related to a current traveling status of the target vehicle, the obtained map level better conforms to an actual traveling requirement of the target vehicle. In addition, because the server has a relatively high computing capability, a map level that matches the current traveling status can be quickly calculated for the target in-vehicle system. This improves a response speed of a map service function and improves driving safety. In addition, the target in-vehicle system may actively request the server to disable a map service, so that additional overheads of the target in-vehicle system are reduced.

In some possible implementations, the target in-vehicle system may further exchange information with a user and/or the server through an in-vehicle terminal, a wearable device, or user equipment, to implement use or stop of the map level.

For example, the target in-vehicle system receives the first map level entered by the user through a touchscreen of the in-vehicle terminal. After receiving the first map level entered by the user, the in-vehicle system uses the first map level, and performs the control operation corresponding to the first map level. Alternatively, after receiving entered indication information of stopping the first map level, the in-vehicle system stops using the first map level.

It can be learned that, in the solutions in this embodiment, through interaction between the in-vehicle system and the user, the user autonomously controls use of the map level, so that user experience is improved.

FIG. 7 is a block diagram of a structure of a server according to an embodiment of this application. As shown in FIG. 7, the server 700 includes:
a processing module 701, configured to determine, based on a control parameter corresponding to a target vehicle, a first map level corresponding to the target vehicle; and
a transceiver module 702, configured to send a first message to a target in-vehicle system of the target vehicle, where the first message indicates the first map level.

In some possible implementations, when determining, based on the control parameter corresponding to the target vehicle, the first map level corresponding to the target vehicle, the processing module 701 is specifically configured to:
determine, based on a preset mapping relationship and the control parameter corresponding to the target vehicle, the first map level corresponding to the target vehicle, where the preset mapping relationship includes a correspondence between the first map level and the control parameter.

In some possible implementations, the control parameter includes one or more of a vehicle speed range, a vehicle acceleration range, a vehicle deceleration range, a vehicle autonomous driving level, and a category of a geographical environment in which the vehicle is located.

In some possible implementations, before determining, based on the control parameter corresponding to the target vehicle, the first map level corresponding to the target vehicle, the processing module 701 is further configured to obtain, based on a traveling status of the target vehicle, the control parameter corresponding to the target vehicle.

In some possible implementations, before the processing module 701 determines, based on the control parameter corresponding to the target vehicle, the first map level corresponding to the target vehicle, the transceiver module 702 is further configured to receive a traveling status of the target vehicle that is uploaded by a road side unit RSU and/or a traveling status of the target vehicle that is uploaded by the target in-vehicle system; and
the processing module 701 is further configured to obtain the control parameter based on the traveling status of the target vehicle that is uploaded by the RSU and/or the traveling status of the target vehicle that is uploaded by the target in-vehicle system.

In some possible implementations, the transceiver module 702 is further configured to receive a traveling status of another vehicle that is uploaded by at least one other in-vehicle system than the target in-vehicle system; and
when obtaining the control parameter based on the traveling status of the target vehicle that is uploaded by the RSU and/or the traveling status of the target vehicle that is uploaded by the target in-vehicle system, the processing module 701 is specifically configured to:
obtain the control parameter based on the traveling status of the at least one other vehicle, and the traveling status of the target vehicle that is uploaded by the RSU and/or the traveling status of the target vehicle that is uploaded by the target in-vehicle system.

In some possible implementations, the first message is used to indicate the target in-vehicle system to perform a control operation corresponding to the first map level, where
the control operation includes that the target in-vehicle system uses map data at a map precision level corresponding to the first map level; and/or
the control operation includes that the target in-vehicle system controls traveling of the target vehicle based on a mapping relationship between the first map level and a traveling parameter, where the traveling parameter includes one or more of the vehicle speed range, the vehicle acceleration range, the vehicle deceleration range, the vehicle autonomous driving level, and a vehicle hardware configuration level.

In some possible implementations, the map data is provided by the server 700 for the target in-vehicle system.

In some possible implementations, before the processing module 701 determines, based on the control parameter corresponding to the target vehicle, the first map level corresponding to the target vehicle, the transceiver module 702 is further configured to receive a request message sent by the target in-vehicle system, where the request message is used to request the server to indicate a map level.

In some possible implementations, the transceiver module 702 is further configured to send a map stop indication to the target in-vehicle system, where the map stop indication is used to indicate the target in-vehicle system to stop using the first map level.

In some possible implementations, before sending the map stop indication to the target in-vehicle system, the transceiver module is further configured to receive a map stop request message sent by the target in-vehicle system, where the map stop request message includes indication information of the first map level.

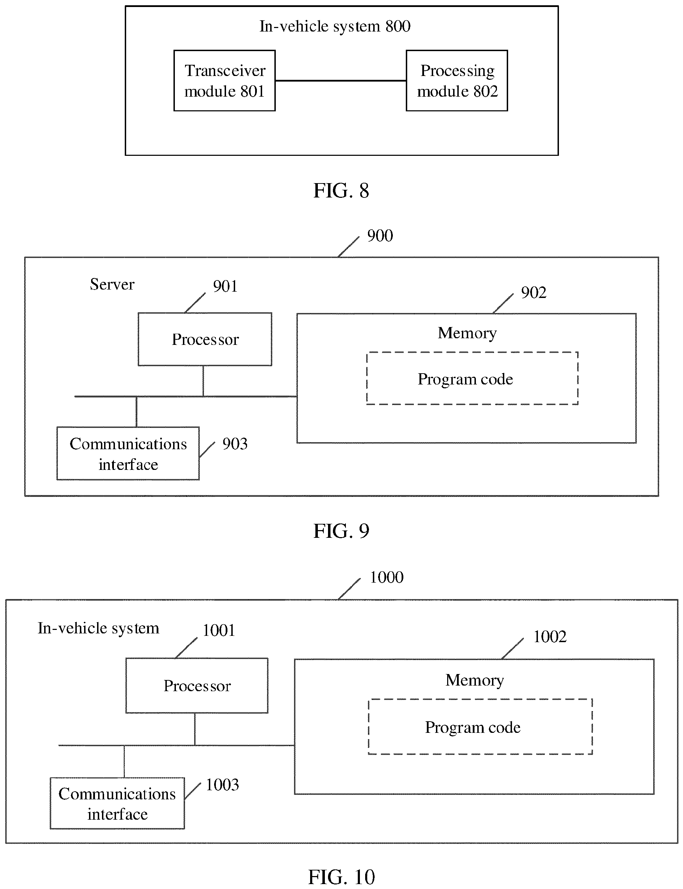

In this embodiment, the server 700 is presented in a form of modules. The "module" herein may be an application-specific integrated circuit (application-specific integrated circuit, ASIC), a processor for executing one or more software or firmware programs, a memory, an integrated logic circuit, and/or another component that may provide the foregoing functions. In addition, the foregoing processing module 701 and transceiver module 702 may be implemented by using a processor 901 of a server shown in FIG. 9.

FIG. 8 shows an in-vehicle system according to an embodiment of this application. As shown in FIG. 8, the in-vehicle system 800 includes:
a transceiver module 801, configured to receive a first message sent by a server, where the first message indicates a first map level, and the first map level is determined based on a control parameter corresponding to a target vehicle to which the target in-vehicle system belongs; and
a processing module 802, configured to perform a control operation corresponding to the first map level.

In some possible implementations, the first map level is determined by the server based on a preset mapping relationship and the control parameter corresponding to the target vehicle, and the preset mapping relationship includes a correspondence between the first map level and the control parameter.

In some possible implementations, the control parameter includes one or more of a vehicle speed range, a vehicle acceleration range, a vehicle deceleration range, a vehicle autonomous control level, and a category of a geographical environment in which the vehicle is located.

In some possible implementations, the control parameter is obtained by the server based on a traveling status of the target vehicle.

In some possible implementations, the control parameter is obtained by the server based on a traveling status of the target vehicle that is uploaded by a road side unit RSU and/or a traveling status of the target vehicle that is uploaded by the target in-vehicle system.

In some possible implementations, the control parameter is obtained by the server based on a traveling status of at least one other vehicle and the traveling status of the target vehicle that is uploaded by the RSU and/or the traveling status of the target vehicle that is uploaded by the target in-vehicle system, and the traveling status of the at least one other vehicle is uploaded by at least one other in-vehicle system than the target in-vehicle system to the server.

In some possible implementations, when performing the control operation corresponding to the first map level, the processing module 802 is specifically configured to:
use map data at a map precision level corresponding to the first map level; and/or
control traveling of the target vehicle based on a mapping relationship between the first map level and a traveling parameter, where the traveling parameter includes one or more of the vehicle speed range, the vehicle acceleration range, the vehicle deceleration range, the vehicle autonomous driving level, and a vehicle hardware configuration level.

In some possible implementations, the map data is obtained by the target in-vehicle system from the server.

In some possible implementations, before receiving the first message sent by the server, the transceiver module 801 is further configured to send a request message to the server, where the request message is used to request the server to indicate a map level.

In some possible implementations, the transceiver module 801 is further configured to receive a map stop indication sent by the server; and
the processing module 802 is further configured to stop, according to the map stop indication, using the first map level.

In some possible implementations, before receiving the map stop indication sent by the server, the transceiver module 801 is further configured to send map stop request message to the server, where the map stop request message includes indication information of the first map level.

In this embodiment, the in-vehicle system 800 is presented in a form of modules. The "module" herein may be an application-specific integrated circuit (application-specific integrated circuit, ASIC), a processor for executing one or more software or firmware programs, a memory, an integrated logic circuit, and/or another component that may provide the foregoing functions. In addition, the foregoing transceiver module 801 and processing module 802 may be implemented by using a processor 1001 of an in-vehicle system shown in FIG. 10.

As shown in FIG. 9, a server 900 may be implemented by using a structure in FIG. 9. The server 900 includes at least one processor 901, at least one memory 902, and at least one communications interface 903. The processor 901, the memory 902, and the communications interface 903 are connected to and communicate with each other through a communications bus.

The processor 901 may be a general-purpose central processing unit (CPU), a microprocessor, an application-specific integrated circuit (application-specific integrated circuit, ASIC), or one or more integrated circuits configured to control execution of the foregoing solution program.

The communications interface 903 is configured to communicate with another device or a communications network such as the Ethernet, a radio access network (RAN), or a wireless local area network (Wireless Local Area Network, WLAN).

The memory 902 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, or the like), a magnetic disk storage medium, another magnetic storage device, or any other medium that can be configured to carry or store expected program code in a form of an instruction or a data structure and that can be accessed by a computer. However, this is not limited thereto. The memory may exist independently, and is connected to the processor through a bus. The memory may alternatively be integrated with the processor.

The memory 902 is configured to store application program code used to execute the foregoing solution, and the processor 901 controls the execution. The processor 901 is configured to execute the application program code stored in the memory 902.

The code stored in the memory 902 may be used to perform the map level indication method performed by the server in any one of FIG. 2 to FIG. 6, for example, may be used to:
determine, based on a control parameter corresponding to a target vehicle, a first map level corresponding to the target vehicle; and
send a first message to a target in-vehicle system of the target vehicle, where the first message indicates the first map level.

As shown in FIG. 10, an in-vehicle system 1000 may be implemented by using a structure in FIG. 10. The in-vehicle system 1000 includes at least one processor 1001, at least one memory 1002, and at least one communications interface 1003. The processor 1001, the memory 1002, and the communications interface 1003 are connected to and communicate with each other through a communications bus.

The processor 1001 may be a general-purpose central processing unit (CPU), a microprocessor, an application-specific integrated circuit (application-specific integrated circuit, ASIC), or one or more integrated circuits configured to control execution of the foregoing solution program.

The communications interface 1003 is configured to communicate with another device or a communications network such as the Ethernet, a radio access network (RAN), or a wireless local area network (Wireless Local Area Network, WLAN).

The memory 1002 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, or the like), a magnetic disk storage medium, another magnetic storage device, or any other medium that can be configured to carry or store expected program code in a form of an instruction or a data structure and that can be accessed by a computer. However, this is not limited thereto. The memory may exist independently, and is connected to the processor through a bus. The memory may alternatively be integrated with the processor.

The memory 1002 is configured to store application program code used to execute the foregoing solution, and the processor 1001 controls the execution. The processor 1001 is configured to execute the application program code stored in the memory 1002.

The code stored in the memory 1002 may be used to perform the map level indication method performed by the target in-vehicle system in any one of FIG. 2 to FIG. 6, for example, may be used to:
receive a first message sent by a server, where the first message indicates a first map level, and the first map level is determined based on a control parameter corresponding to a target vehicle to which the target in-vehicle system belongs; and
perform a control operation corresponding to the first map level.

An embodiment of the present invention further provides a computer storage medium. The computer storage medium may store a program, and when the program is executed, some or all steps of any map level indication method described in the foregoing method embodiments are included.

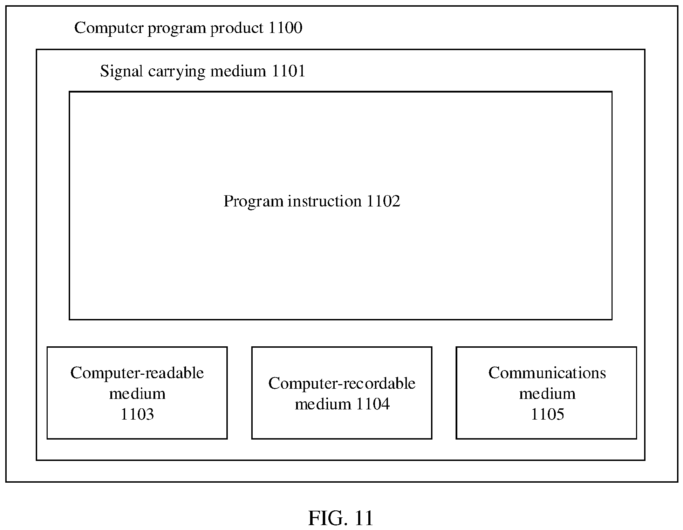

Program product embodiment:
In some embodiments, the disclosed method may be implemented as computer program instructions encoded in a machine-readable format on a computer-readable storage medium or encoded on another non-transitory medium or product. FIG. 11 schematically shows a conceptual partial view of an example computer program product arranged according to at least some embodiments shown herein. The example computer program product includes a computer program for executing a computer process on a computing device. In an embodiment, the example computer program product 1100 is provided by using a signal carrying medium 1101. The signal carrying medium 1101 may include one or more program instructions 1102. When being run by one or more processors, the one or more program instructions may provide the foregoing functions or some functions described for FIG. 2 to FIG. 6. In addition, the program instructions 1102 in FIG. 11 also describe example instructions.

In some examples, the signal carrying medium 1101 may include a computer-readable medium 1703, for example but not limited to, a hard disk drive, a compact disk (CD), a digital video disc (DVD), a digital tape, a memory, a read-only memory (Read-Only Memory, ROM), or a random access memory (Random Access Memory, RAM). In some implementations, the signal carrying medium 1101 may include a computer-recordable medium 1104, for example but not limited to, a memory, a read/write (R/W) CD, an R/W DVD, or the like. In some implementations, the signal carrying medium 1101 may include a communications medium 1705, for example but not limited to, digital and/or analog communications medium (for example, an optical fiber, a waveguide, a wired communication link, or a wireless communication link). Therefore, for example, the signal carrying medium 1101 may be conveyed by the communications medium 1105 in a wireless form (for example, a wireless communications medium that complies with the IEEE 802.11 standard or another transmission protocol). The one or more program instructions 1102 may be, for example, one or more computer-executable instructions or one or more logic implementation instructions. In some examples, a computing device or the like described for FIG. 2 to FIG. 6 may be configured to provide various operations, functions, or actions in response to the program instructions 1102 transmitted to the computing device by using one or more of the computer-readable medium 1103, the computer-recordable medium 1104, and/or the communications medium 1105. It should be understood that the arrangement described herein is merely used as an example. Therefore, it may be understood by a person skilled in the art that other arrangements and other elements (for example, machines, interfaces, functions, sequences, and groups of functions) can be used instead, and that some elements may be omitted together based on an expected result. In addition, many of the described elements are functional entities that can be implemented as discrete or distributed components, or implemented in any suitable combination at any suitable location in combination with another component.

It should be noted that, for brief descriptions, the foregoing method embodiments are expressed as a series of actions. However, a person skilled in the art should learn that the present invention is not limited to the described action sequence, because according to the present invention, some steps may be performed in other sequences or performed simultaneously. In addition, a person skilled in the art should also know that all the embodiments described in the specification are preferred embodiments, and the related actions and modules are not necessarily mandatory to the present invention. In addition, the foregoing plurality of embodiments may be combined with each other in a case of no conflict, and in particular, same operations may be combined with each other.

In the foregoing embodiments, descriptions of the embodiments have respective focuses. For a part that is not described in detail in an embodiment, refer to related descriptions in other embodiments.

In the several embodiments provided in this application, it should be understood that the disclosed apparatuses may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form or another form.

Units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable memory. Based on such an understanding, the technical solutions of the present invention essentially, or the part contributing to the conventional technology, or all or some of the technical solutions may be implemented in a form of a software product. The computer software product is stored in a memory and includes several instructions for instructing a computer device (which may be a personal computer, a server, a network device, or the like) to perform all or some of the steps of the methods described in the embodiments of the present invention. The foregoing memory includes any medium that can store program code, for example, a USB flash drive, a read-only memory (ROM, Read-Only Memory), a random access memory (RAM, Random Access Memory), a removable hard disk, a magnetic disk, or an optical disc.

A person of ordinary skill in the art may understand that all or some of the steps of the methods in the embodiments may be implemented by a program instructing related hardware. The program may be stored in a computer-readable memory. The memory may include a flash memory, a read-only memory (Read-Only Memory, ROM for short), a random access memory (English: Random Access Memory, RAM for short), a magnetic disk, an optical disc, or the like.

The embodiments of the present invention are described in detail above. The principle and implementation of the present invention are described in this specification by using specific examples. The descriptions about the embodiments are merely provided to help understand the method and core ideas of the present invention. In addition, a person of ordinary skill in the art makes variations to the present invention in terms of the specific implementations and application scopes based on the ideas of the present invention. Therefore, the content of this specification shall not be construed as a limitation on the present invention.

## Claims

1. A map level indication method, comprising:
Determining, by a server based on a control parameter corresponding to a target vehicle, a first map level corresponding to the target vehicle; and
Sending, by the server, a first message to a target in-vehicle system of the target vehicle, wherein the first message indicates the first map level.

2. The method according to claim 1, wherein the determining, by a server based on a control parameter corresponding to a target vehicle, a first map level corresponding to the target vehicle comprises:
determining, by the server based on a preset mapping relationship and the control parameter corresponding to the target vehicle, the first map level corresponding to the target vehicle, wherein the preset mapping relationship comprises a correspondence between the first map level and the control parameter.

3. The method according to claim 1 or 2, wherein the control parameter comprises one or more of a vehicle speed range, a vehicle acceleration range, a vehicle deceleration range, a vehicle autonomous driving level, and a category of a geographical environment in which the vehicle is located.

4. The method according to any one of claims 1 to 3, wherein before the determining, by a server based on a control parameter corresponding to a target vehicle, a first map level corresponding to the target vehicle, the method further comprises:
obtaining, by the server based on a traveling status of the target vehicle, the control parameter corresponding to the target vehicle.

5. The method according to any one of claims 1 to 4, wherein before the determining, by a server based on a control parameter corresponding to a target vehicle, a first map level corresponding to the target vehicle, the method further comprises:
receiving, by the server, a traveling status of the target vehicle that is uploaded by a road side unit RSU and/or a traveling status of the target vehicle that is uploaded by the target in-vehicle system; and
obtaining, by the server, the control parameter based on the traveling status of the target vehicle that is uploaded by the RSU and/or the traveling status of the target vehicle that is uploaded by the target in-vehicle system.

6. The method according to claim 5, wherein the method further comprises:
further receiving, by the server, a traveling status of another vehicle that is uploaded by at least one other in-vehicle system than the target in-vehicle system, wherein the obtaining, by the server, the control parameter based on the traveling status of the target vehicle that is uploaded by the RSU and/or the traveling status of the target vehicle that is uploaded by the target in-vehicle system comprises:
obtaining, by the server, the control parameter based on the traveling status of the at least one other vehicle, and the traveling status of the target vehicle that is uploaded by the RSU and/or the traveling status of the target vehicle that is uploaded by the target in-vehicle system.

7. The method according to any one of claims 1 to 6, wherein the first message is used to indicate the target in-vehicle system to perform a control operation corresponding to the first map level, wherein
the control operation comprises that the target in-vehicle system uses map data at a map precision level corresponding to the first map level; and/or
the control operation comprises that the target in-vehicle system controls traveling of the target vehicle based on a mapping relationship between the first map level and a traveling parameter, wherein the traveling parameter comprises one or more of the vehicle speed range, the vehicle acceleration range, the vehicle deceleration range, the vehicle autonomous driving level, and a vehicle hardware configuration level.

8. The method according to claim 7, wherein the map data is provided by the server for the target in-vehicle system.

9. The method according to any one of claims 1 to 8, wherein before the determining, by a server based on a control parameter corresponding to a target vehicle, a first map level corresponding to the target vehicle, the method further comprises:
receiving, by the server, a request message sent by the target in-vehicle system, wherein the request message is used to request the server to indicate a map level.

10. A map level obtaining method, comprising:
Receiving, by a target in-vehicle system, a first message sent by a server, wherein the first message indicates a first map level, and the first map level is determined based on a control parameter corresponding to a target vehicle to which the target in-vehicle system belongs; and
performing, by the target in-vehicle system, a control operation corresponding to the first map level.

11. The method according to claim 10, wherein
the first map level is determined by the server based on a preset mapping relationship and the control parameter corresponding to the target vehicle, and the preset mapping relationship comprises a correspondence between the first map level and the control parameter.

12. The method according to claim 10 or 11, wherein the control parameter comprises one or more of a vehicle speed range, a vehicle acceleration range, a vehicle deceleration range, a vehicle autonomous control level, and a category of a geographical environment in which the vehicle is located.

13. The method according to any one of claims 10 to 12, wherein the control parameter is obtained based on a traveling status of the target vehicle.

14. The method according to any one of claims 10 to 13, wherein
the control parameter is obtained by the server based on a traveling status of the target vehicle that is uploaded by a road side unit RSU and/or a traveling status of the target vehicle that is uploaded by the target in-vehicle system.

15. The method according to claim 14, wherein
the control parameter is obtained by the server based on a traveling status of at least one other vehicle and the traveling status of the target vehicle that is uploaded by the RSU and/or the traveling status of the target vehicle that is uploaded by the target in-vehicle system, and the traveling status of the at least one other vehicle is uploaded by at least one other in-vehicle system than the target in-vehicle system to the server.

16. The method according to any one of claims 10 to 15, wherein
the performing, by the target in-vehicle system, a control operation corresponding to the first map level comprises:
using, by the target in-vehicle system, map data at a map precision level corresponding to the first map level; and/or
controlling, by the target in-vehicle system, traveling of the target vehicle based on a mapping relationship between the first map level and a traveling parameter, wherein the traveling parameter comprises one or more of the vehicle speed range, the vehicle acceleration range, the vehicle deceleration range, the vehicle autonomous driving level, and a vehicle hardware configuration level.

17. The method according to claim 16, wherein the map data is obtained by the target in-vehicle system from the server.

18. The method according to any one of claims 10 to 17, wherein before the receiving, by a target in-vehicle system, a first message sent by a server, the method further comprises:
sending, by the target in-vehicle system, a request message to the server, wherein the request message is used to request the server to indicate a map level.

19. A server, comprising:
a processing module, configured to determine, based on a control parameter corresponding to a target vehicle, a first map level corresponding to the target vehicle; and
a transceiver module, configured to send a first message to a target in-vehicle system of the target vehicle, wherein the first message indicates the first map level.

20. The server according to claim 19, wherein the processing module is specifically configured to determine, based on the control parameter corresponding to the target vehicle, the first map level corresponding to the target vehicle in the following manner:
determining, based on a preset mapping relationship and the control parameter corresponding to the target vehicle, the first map level corresponding to the target vehicle, wherein the preset mapping relationship comprises a correspondence between the first map level and the control parameter.

21. The server according to claim 19 or 20, wherein the control parameter comprises one or more of a vehicle speed range, a vehicle acceleration range, a vehicle deceleration range, a vehicle autonomous driving level, and a category of a geographical environment in which the vehicle is located.

22. The server according to any one of claims 19 to 21, wherein the processing module is further configured to obtain, based on a traveling status of the target vehicle, the control parameter corresponding to the target vehicle.

23. The server according to any one of claims 19 to 22, wherein the transceiver module is further configured to receive a traveling status of the target vehicle that is uploaded by a road side unit RSU and/or a traveling status of the target vehicle that is uploaded by the target in-vehicle system; and
the processing module is further configured to obtain the control parameter based on the traveling status of the target vehicle that is uploaded by the RSU and/or the traveling status of the target vehicle that is uploaded by the target in-vehicle system.

24. The server according to claim 23, wherein
the transceiver module is further configured to receive a traveling status of another vehicle that is uploaded by at least one other in-vehicle system than the target in-vehicle system; and
the processing module is specifically configured to obtain the control parameter in the following manner based on the traveling status of the target vehicle that is uploaded by the RSU and/or the traveling status of the target vehicle that is uploaded by the target in-vehicle system:
obtaining the control parameter based on the traveling status of the at least one other vehicle, and the traveling status of the target vehicle that is uploaded by the RSU and/or the traveling status of the target vehicle that is uploaded by the target in-vehicle system.

25. The server according to any one of claims 19 to 24, wherein the first message is used to indicate the target in-vehicle system to perform a control operation corresponding to the first map level, wherein
the control operation comprises that the target in-vehicle system uses map data at a map precision level corresponding to the first map level; and/or
the control operation comprises that the target in-vehicle system controls traveling of the target vehicle based on a mapping relationship between the first map level and a traveling parameter, wherein the traveling parameter comprises one or more of the vehicle speed range, the vehicle acceleration range, the vehicle deceleration range, the vehicle autonomous driving level, and a vehicle hardware configuration level.

26. The server according to claim 25, wherein the map data is provided by the server for the target in-vehicle system.

27. The server according to any one of claims 19 to 26, wherein the transceiver module is further configured to receive a request message sent by the target in-vehicle system, wherein the request message is used to request the server to indicate a map level.

28. An in-vehicle system, comprising:
a transceiver module, configured to receive a first message sent by a server, wherein the first message indicates a first map level, and the first map level is determined based on a control parameter corresponding to a target vehicle to which the target in-vehicle system belongs; and
a processing module, configured to perform a control operation corresponding to the first map level.

29. The system according to claim 28, wherein
the first map level is determined by the server based on a preset mapping relationship and the control parameter corresponding to the target vehicle, and the preset mapping relationship comprises a correspondence between the first map level and the control parameter.

30. The system according to claim 28 or 29, wherein the control parameter comprises one or more of a vehicle speed range, a vehicle acceleration range, a vehicle deceleration range, a vehicle autonomous control level, and a category of a geographical environment in which the vehicle is located.

31. The system according to any one of claims 28 to 30, wherein the control parameter is obtained based on a traveling status of the target vehicle.

32. The system according to any one of claims 28 to 31, wherein
the control parameter is obtained by the server based on a traveling status of the target vehicle that is uploaded by a road side unit RSU and/or a traveling status of the target vehicle that is uploaded by the target in-vehicle system.

33. The system according to claim 32, wherein
the control parameter is obtained by the server based on a traveling status of at least one other vehicle and the traveling status of the target vehicle that is uploaded by the RSU and/or the traveling status of the target vehicle that is uploaded by the target in-vehicle system, and the traveling status of the at least one other vehicle is uploaded by at least one other in-vehicle system than the target in-vehicle system to the server.

34. The system according to any one of claims 28 to 33, wherein
the processing module is specifically configured to perform the control operation corresponding to the first map level in the following manner:
using map data at a map precision level corresponding to the first map level; and/or
controlling traveling of the target vehicle based on a mapping relationship between the first map level and a traveling parameter, wherein the traveling parameter comprises one or more of the vehicle speed range, the vehicle acceleration range, the vehicle deceleration range, the vehicle autonomous driving level, and a vehicle hardware configuration level.

35. The system according to claim 34, wherein the map data is obtained by the target in-vehicle system from the server.

36. The system according to any one of claims 28 to 35, wherein before receiving the first message sent by the server, the transceiver module is further configured to send a request message to the server, wherein the request message is used to request the server to indicate a map level.

37. An apparatus, comprising:
a memory, configured to store a program; and
a processor, configured to execute the program stored in the memory, wherein when the program stored in the memory is executed, the processor is configured to perform the method according to claims 1 to 9 or claims 10 to 18.

38. A computer-readable storage medium, wherein the computer-readable storage medium is configured to store program code that can be executed by a device, and when being executed by the device, the program code is used to implement the method according to claims 1 to 9 or claims 10 to 18.
